# EUROPÄISCHE PATENTSCHRIFT

(11) **EP 3 999 709 B1**
(45) Veröffentlichungstag und Bekanntmachung des Hinweises auf die Patenterteilung: **20.03.2024**
(21) Anmeldenummer: 20737478.6
(22) Anmeldetag: 14.07.2020
(51) Int. Cl.: E06B 3/663

(54) **ABSTANDHALTER FÜR ISOLIERGLASEINHEITEN**
SPACER FOR INSULATING GLAZING
ÉCARTEUR POUR UNITÉS DE VERRE ISOLANT

(30) Priorität: 17.07.2019 EP 19186751
(43) Veröffentlichungstag der Anmeldung: 25.05.2022
(73) Patentinhaber: Saint-Gobain Glass France, 92400 Courbevoie (FR)
(72) Erfinder: KUSTER, Hans-Werner, 52066 AACHEN (DE); MARJAN, Christopher, 52072 Aachen (DE); SCHREIBER, Walter, 52074 Aachen (DE)
(74) Vertreter: Gebauer, Dieter Edmund
(86) Internationale Anmeldenummer: PCT/EP2020/069901
(87) Internationale Veröffentlichungsnummer: WO 2021/009176

(56) Entgegenhaltungen:
- WO-A1-2018/050357
- US-A- 4 113 905

## Beschreibung

Die Erfindung betrifft einen Abstandhalter für Isolierglaseinheiten, eine Isolierglaseinheit, ein Verfahren zur Herstellung einer Isolierglaseinheit und deren Verwendung.

Isolierglaseinheiten enthalten in der Regel mindestens zwei Scheiben aus Glas oder polymeren Materialien. Die Scheiben sind über einen vom Abstandshalter (Spacer) definierten Gas- oder Vakuumraum voneinander getrennt. Das Wärmedämmvermögen von Isolierglas ist deutlich höher als das von Einfachglas und kann in Dreifachverglasungen oder mit speziellen Beschichtungen noch weiter gesteigert und verbessert werden. So ermöglichen beispielsweise silberhaltige Beschichtungen eine verringerte Transmission von infraroter Strahlung und senken so die Abkühlung eines Gebäudes im Winter.

Neben der Beschaffenheit und dem Aufbau des Glases sind auch die weiteren Komponenten einer Isolierglaseinheit von großer Bedeutung. Die Dichtung und vor allem der Abstandshalter haben einen großen Einfluss auf die Qualität der Isolierglaseinheit. Vor allem die Kontaktstellen zwischen dem Abstandshalter und der Glasscheibe sind sehr anfällig für Temperatur- und Klimaschwankungen. Die Verbindung zwischen Scheibe und Abstandshalter wird über eine Klebeverbindung aus organischem Polymer, beispielsweise Polyisobutylen erzeugt. Neben den direkten Auswirkungen der Temperaturschwankungen auf die physikalischen Eigenschaften der Klebeverbindung wirkt sich besonders das Glas selbst auf die Klebeverbindung aus. Das Glas und die Abstandhalter haben unterschiedliche thermische Längenausdehnungskoeffizienten, das heißt sie dehnen sich bei Temperaturänderungen unterschiedlich stark aus. Aufgrund der Temperaturänderungen, beispielsweise durch Sonneneinstrahlung dehnt sich das Glas aus oder zieht sich bei einer Erkaltung wieder zusammen. Der Abstandhalter macht diese Bewegungen nicht in gleichem Maße mit. Diese mechanische Bewegung dehnt oder staucht daher die Klebeverbindung, welche diese Bewegungen nur in einem begrenzten Maße durch eigene Elastizität ausgleichen kann. Im Laufe der Betriebsdauer der Isolierglaseinheit kann der beschriebene mechanische Stress eine teil- oder ganzflächige Ablösung der Klebeverbindung bedeuten. Diese Ablösung der Klebeverbindung kann anschließend ein Eindringen von Luftfeuchtigkeit innerhalb der Isolierglaseinheit ermöglichen. Diese Klimalasten können einen Beschlag im Bereich der Scheiben und ein Nachlassen der Isolierwirkung nach sich ziehen. Es ist somit erstrebenswert, die Längenausdehnungskoeffizienten von Glas und Abstandhaltern so weit wie möglich anzugleichen.

Die wärmeisolierenden Eigenschaften von Isolierglaseinheiten werden ganz wesentlich vom Wärmeleitvermögen im Bereich des Randverbunds, insbesondere des Abstandhalters beeinflusst. Bei metallischen Abstandhaltern kommt es durch die hohe thermische Leitfähigkeit des Metalls zur Ausbildung einer Wärmebrücke am Rand des Glases. Diese Wärmebrücke führt einerseits zu Wärmeverlusten im Randbereich der Isolierglaseinheit und andererseits bei hoher Luftfeuchtigkeit und niedrigen Außentemperaturen zur Bildung von Kondensat auf der Innenscheibe im Bereich des Abstandshalters. Um diese Probleme zu lösen, werden vermehrt thermisch optimierte, sogenannte "Warme-Kante"-Systeme eingesetzt, bei denen die Abstandhalter aus Materialien mit geringerer Wärmeleitfähigkeit, insbesondere Kunststoffen bestehen.

Von dem Aspekt der Wärmeleitfähigkeit sind polymere Abstandhalter zu bevorzugen gegenüber metallischen Abstandhaltern. Allerdings haben polymere Abstandhalter mehrere Nachteile. Zum einen ist die Dichtigkeit der polymeren Abstandhalter gegenüber Feuchtigkeit und Gasverlust nicht ausreichend. Hier gibt es verschiedene Lösungen, insbesondere über das Aufbringen einer Barrierefolie auf die Außenseite des Abstandhalters (siehe zum Beispiel WO2013/104507 A1).

Zum anderen sind die Längenausdehnungskoeffizienten von Kunststoffen viel größer als die von Glas. Zur Angleichung der Längenausdehnungskoeffizienten können zum Beispiel Glasfasern beigemischt werden (siehe zum Beispiel EP0852280 A1 und DE19807454 A1). Ein erhöhter Glasfaseranteil verschlechtert jedoch die wärmeleitenden Eigenschaften des Abstandhalters, sodass hier eine genaue Optimierung erfolgen muss. Glasfasern und ähnliche Füllstoffe verbessern zudem die Längssteifigkeit des Abstandhalters.

Polymere glasfaserverstärkte Abstandhalter sind so spröde, dass sie im Gegensatz zu metallischen Abstandhaltern nicht kalt biegbar sind. Für die Herstellung eines Abstandhalterrahmens für eine Isolierglaseinheit müssen mehrere Stücke Abstandhalter über Steckverbinder verbunden werden und verklebt oder verschweißt werden. Jede Verbindungsstelle muss sorgfältig abgedichtet werden. Ein Ansatz für die Erhöhung der Biegbarkeit ist die Integration eines metallischen Streifens in den polymeren Grundkörper (zum Beispiel in der WO2015/043848 A1 und der DE19807454 A1 beschrieben). Die Integration eines metallischen Streifens in den polymeren Grundkörper ist bei der Herstellung allerdings sehr aufwändig.

Polymere Abstandhalter ohne zusätzliche Füllstoffe wie Glasfasern sind flexibel und nicht ausreichend steif. Die Längssteifigkeit (bezieht sich auf die Durchbiegung in Längsrichtung) ist jedoch wichtig für eine maschinelle Verarbeitbarkeit. Eine Verbesserung der Längssteifigkeit kann durch die Integration metallischer Streifen erzielt werden (siehe vorheriger Punkt) oder das äußerliche Aufbringen metallischer Elemente auf den Körper (siehe zum Beispiel EP1055046 B2 und EP3241972 A1). Das Aufbringen eines metallischen Streifens verschlechtert jedoch die wärmeleitenden Eigenschaften des Abstandhalters, da die metallischen Elemente eine erhöhte Wärmeleitfähigkeit besitzen. Eine besondere Schwierigkeit beim äußerlichen Aufbringen einzelner metallischer Elemente ist die perfekte Abdichtung des Randverbunds gegen das Eindringen von Feuchtigkeit.

Bei der Herstellung einer Isolierglaseinheit werden Pressen zum Verpressen von Abstandhalter und den Glasscheiben eingesetzt. Diese üben einen Druck auf den Abstandhalter aus, der bei zu hohem Druck zu einer Beschädigung des Abstandhalters führen kann.

DE 10 2011 009 359 A1 offenbart ein Abstandhalterprofil mit einem Hohlprofilkörper aus einem ersten Kunststoffmaterial und einem Diffusionssperrbereich aus einem zweiten Kunststoffmaterial mit Schichtsilikat, der mindestens als Teil der Außenwand des Hohlprofilkörpers zur Bildung einer Diffusionssperre ausgebildet ist.

In WO 2015/086459 A1 sind Abstandhalter für Isolierverglasungen mit extrudiertem Dichtprofil offenbart und in WO 2018/050357 A1 sind Abstandhalter mit einer Nut zur Aufnahme einer Scheibe offenbart.

US 4,113,905 offenbart einen Verbundschaum-Abstandhalter bestehend aus einem dünnen extrudierten Kern und einer relativ dicken Schaumschicht, die auf den Kern gegossen wird.

Da die oben aufgeführten Probleme und einzelnen Lösungen ineinandergreifen und sich gegenseitig beeinflussen, muss eine Gesamtlösung gefunden werden, die alle diese Probleme zu einer akzeptablen Lösung zusammenführt.

Es ist daher die Aufgabe der vorliegenden Erfindung, einen verbesserten Abstandhalter bereitzustellen, der die oben genannten Nachteile nicht aufweist, sowie eine verbesserte Isolierglaseinheit und ein vereinfachtes Verfahren zu deren Herstellung bereitzustellen.

Die Aufgabe der vorliegenden Erfindung wird erfindungsgemäß durch einen Abstandhalter für Isolierglaseinheiten nach dem unabhängigen Anspruch 1 gelöst. Bevorzugte Ausführungen der Erfindung gehen aus den Unteransprüchen hervor.

Ein Verfahren zur Herstellung des erfindungsgemäßen Abstandhalters, eine erfindungsgemäße Isolierglaseinheit, ein Verfahren zur Herstellung der erfindungsgemäßen Isolierglaseinheit und deren erfindungsgemäße Verwendung gehen aus weiteren unabhängigen Ansprüchen hervor.

Der erfindungsgemäße Abstandhalter für Isolierglaseinheiten umfasst mindestens einen Grundkörper mit einer ersten Seitenwand, einer parallel dazu angeordneten zweiten Seitenwand, einer Verglasungsinnenraumwand, einer Außenwand und einem Hohlraum. Der Hohlraum wird von den Seitenwänden, der Verglasungsinnenraumwand und der Außenwand umschlossen. Die Verglasungsinnenraumwand ist dabei im Wesentlichen senkrecht zu den Seitenwänden angeordnet und verbindet die erste Seitenwand mit der zweiten Seitenwand. Die Seitenwände sind die Wände des Grundkörpers, an denen die äußeren Scheiben der Isolierglaseinheit angebracht werden. Die Verglasungsinnenraumwand ist die Wand des Grundkörpers, die nach Einbau in die fertige Isolierglaseinheit zum inneren Scheibenzwischenraum weist. Die Außenwand ist im Wesentlichen parallel zur Verglasungsinnenraumwand angeordnet und verbindet die erste Seitenwand mit der zweiten Seitenwand, wobei die erste Seitenwand mit der Außenwand direkt oder über eine erste Verbindungswand und die zweite Seitenwand mit der Außenwand direkt oder über eine zweite Verbindungswand verbunden sind. Die Außenwand weist nach Einbau in die fertige Isolierglaseinheit zum äußeren Scheibenzwischenraum. Der Hohlraum des Grundkörpers wird von den Seitenwänden, der Verglasungsinnenraumwand und der Außenwand oder von den Seitenwänden, der Verglasungsinnenraumwand, der Außenwand und den Verbindungswänden umschlossen.

Erfindungsgemäß besteht der Grundkörper aus einem ersten Kunststoff und einem zweiten Kunststoff, wobei der zweite Kunststoff eine geringere Wärmeleitfähigkeit und eine höhere Flexibilität als der erste Kunststoff aufweist.

Erfindungsgemäß ist der Grundkörper als ein aus einem zweiten Kunststoff gebildetes Hohlprofil ausgebildet, in dem innenseitig unmittelbar angrenzend an das Hohlprofil zumindest bereichsweise ein erster Kunststoff angeordnet ist.

Bevorzugt ist der erste Kunststoff zumindest im Bereich der Seitenwände innenseitig in dem aus dem zweiten Kunststoff gebildeten Hohlprofil angeordnet.

Bevorzugt weist der zweite Kunststoff eine um mindestens 15 %, besonders bevorzugt um mindestens 20 % geringere Wärmeleitfähigkeit auf als der erste Kunststoff.

Bevorzugt weist der zweite Kunststoff eine um mindestens 5 %, besonders bevorzugt um mindestens 10 %, ganz bevorzugt um mindestens 30 % höhere Flexibilität auf als der erste Kunststoff.

Erfindungsgemäß handelt es sich bei dem Grundkörper des Abstandhalters um einen aus einem ersten Kunststoff und einem zweiten Kunststoff co-extrudierten Grundkörper, d.h. der Grundkörper wurde durch Co-Extrusion eines ersten Kunststoffs mit einem zweiten Kunststoff hergestellt.

Die optionale erste Verbindungswand und die optionale zweite Verbindungswand verlaufen bevorzugt in einem Winkel α (Alpha) von 30° bis 60° zur Außenwand. Die abgewinkelte Form der ersten Verbindungswand und der zweiten Verbindungswand verbessert die Stabilität des Grundkörpers und ermöglicht eine bessere Verklebung und Isolierung des erfindungsgemäßen Abstandshalters.

In dem Hohlraum des Abstandhalters kann ein Trockenmittel angeordnet sein. Zudem können in der Verglasungsinnenraumwand Perforierungen angebracht sein, die in der Isolierglaseinheit eine Verbindung zum inneren Scheibenzwischenraum herstellen. Über die Perforierungen in der Verglasungsinnenraumwand kann in dem Hohlraum vorhandenes Trockenmittel dann Feuchtigkeit aus dem inneren Scheibenzwischenraum aufnehmen.

Dadurch, dass bei dem erfindungsgemäßen Abstandhalter der erste Kunststoff im Inneren angeordnet ist, ist dieser von außen nicht sichtbar. Der erste Kunststoff muss daher nicht den hohen optischen Anforderungen entsprechen, denen der zweite Kunststoff entsprechen muss. So kann der erste Kunststoff daher auch ein Recyclingmaterial enthalten oder aus einem Recyclingmaterial bestehen. Der innenliegende erste Kunststoff kann auch wiederverwendet werden. Zudem muss der innenliegende erste Kunststoff keine so hohe UV-Beständigkeit aufweisen wie der außenliegende zweite Kunststoff.

Weiterer Vorteil des erfindungsgemäßen Abstandhalters ist, dass durch den außen angeordneten zweiten Kunststoff in Kombination mit dem innen angeordneten ersten Kunststoff der Abstandhalter unempfindlicher gegenüber Belastungen z.B. während des Pressvorganges zur Herstellung der Isolierglaseinheit wird. Der außenliegende zweite Kunststoff muss nicht alle Lasten aufnehmen, der innenliegende erste Kunststoff kann diese aufnehmen. Es ist somit eine mechanische Kraftverteilung möglich. Zudem können durch die Kombination von einem ersten Kunststoff mit einem zweiten Kunststoff, der eine geringere Wärmeleitfähigkeit aufweist, die Isolationseigenschaften verbessert werden.

In einer Ausführungsform des erfindungsgemäßen Abstandhalters ist der erste Kunststoff ein glasfaserverstärkter Kunststoff und der zweite Kunststoff ist ein Kunststoff, der einen geringeren Glasfaseranteil als der erste Kunststoff aufweist oder frei von Glasfasern ist. Bevorzugt beträgt der Glasfaseranteil des glasfaserverstärkten Kunststoffs 10 % bis 40 %, insbesondere 25 % bis 40 %.

In einer Ausführungsform des erfindungsgemäßen Abstandhalters ist der erste Kunststoff ein ungeschäumter Kunststoff und der zweite Kunststoff ein geschäumter Kunststoff.

In einer Ausführungsform des erfindungsgemäßen Abstandhalters sind sowohl der erste Kunststoff als auch der zweite Kunststoff ein geschäumter Kunststoff und der erste Kunststoff ist ein glasfaserverstärkter Kunststoff.

Bei dem ersten Kunststoff und dem zweiten Kunststoff kann es sich um Kunststoffe auf Basis des gleichen Polymers oder Copolymers handeln, es ist aber auch möglich, dass der erste Kunststoff und der zweite Kunststoff auf unterschiedlichen Polymeren oder Copolymeren basieren.

Der erste Kunststoff und der zweite Kunststoff enthalten unabhängig voneinander beispielsweise thermoplastische Elastomere (TPE), thermoplastische Polyurethane (TPU), Polypropylen (PP), Styrol-Acrylnitril-Copolymer (SAN), Polyethylen (PE), Polycarbonate (PC), Polystyrol, Polyester, Polymethylmetacrylate, Polyacrylate, Polyamide, Polyethylenterephthalat (PET), Polybutylenterephthalat (PBT), bevorzugt Acrylnitril-Butadien-Styrol (ABS), Polypropylen (PP), Acrylester-Styrol-Acrylnitril (ASA), Acrylnitril-Butadien-Styrol - Polycarbonat (ABS/PC), Styrol-Acrylnitril (SAN), PET/PC, PBT/PC und/oder Copolymere oder Gemische davon.

Wie oben beschrieben, kann es sich bei dem ersten Kunststoff auch um ein Recyclingmaterial handeln oder der erste Kunststoff kann ein Recyclingmaterial enthalten.

In einer bevorzugten Ausführungsform ist der erste Kunststoff ein glasfaserverstärktes PP mit einem Glasfaseranteil von 40 % und der zweite Kunststoff ein PP, das nicht glasfaserverstärkt ist.

In einer weiteren bevorzugten Ausführungsform ist der erste Kunststoff ein glasfaserverstärktes SAN mit einem Glasfaseranteil von 35 % und der zweite Kunststoff ein SAN, das nicht glasfaserverstärkt ist.

In einer weiteren bevorzugten Ausführungsform ist der erste Kunststoff ein glasfaserverstärktes SAN mit einem Glasfaseranteil von 35 % und der zweite Kunststoff ein TPU, das nicht glasfaserverstärkt ist.

In einer weiteren bevorzugten Ausführungsform ist der erste Kunststoff ein glasfaserverstärktes SAN mit einem Glasfaseranteil von 35 % und der zweite Kunststoff ein PP, das nicht glasfaserverstärkt ist.

In einer weiteren bevorzugten Ausführungsform ist der erste Kunststoff ein glasfaserverstärktes PP mit einem Glasfaseranteil von 40 % und der zweite Kunststoff ein SAN, das nicht glasfaserverstärkt ist.

In einer weiteren bevorzugten Ausführungsform ist der erste Kunststoff ein glasfaserverstärktes PP mit einem Glasfaseranteil von 40 % und der zweite Kunststoff ein TPU, das nicht glasfaserverstärkt ist.

In einer weiteren bevorzugten Ausführungsform ist der erste Kunststoff ein glasfaserverstärktes ABS mit einem Glasfaseranteil von 30 % und der zweite Kunststoff ein ABS, das nicht glasfaserverstärkt ist.

In einer weiteren bevorzugten Ausführungsform ist der erste Kunststoff ein glasfaserverstärktes ABS mit einem Glasfaseranteil von 30 % und der zweite Kunststoff ein TPU, das nicht glasfaserverstärkt ist.

In einer weiteren bevorzugten Ausführungsform ist der erste Kunststoff ein glasfaserverstärktes ABS mit einem Glasfaseranteil von 30 % und der zweite Kunststoff ein PP, das nicht glasfaserverstärkt ist.

In einer weiteren bevorzugten Ausführungsform ist der erste Kunststoff ein glasfaserverstärktes PP mit einem Glasfaseranteil von 40 % und der zweite Kunststoff ein ABS, das nicht glasfaserverstärkt ist.

In einer bevorzugten Ausführungsform ist der zweite Kunststoff ein geschäumter Kunststoff.

In einer bevorzugten Ausführungsform bestehen zumindest die erste Seitenwand, die zweite Seitenwand und sofern vorhanden auch die erste Verbindungswand und die zweite Verbindungswand sowohl aus dem ersten Kunststoff als auch aus dem zweiten Kunststoff, wobei die Kunststoffe nicht gemischt sind, sondern nebeneinander angeordnet sind. In den Ausführungsformen, in denen diese Wände aus beiden Kunststoffen bestehen, ist der erste Kunststoff direkt benachbart zum Hohlraum des Grundkörpers, d.h. innen angeordnet und der zweite Kunststoff außenliegend angeordnet, d.h. nicht direkt an den Hohlraum angrenzend. Durch die außenliegende Anordnung des zweiten Kunststoffs kann dieser für eine bessere Isolation und/oder bessere Haftung einer Barrierefolie und/oder ein besseres Erscheinungsbild sorgen.

In einer Ausführungsform besteht der Grundkörper des Abstandhalters innenseitig aus dem ersten Kunststoff und außenseitig aus dem zweiten Kunststoff. Mit innenseitig sind die Bereiche des Grundkörpers gemeint, die an den Hohlraum angrenzen und mit außenseitig die Bereiche, die nicht an den Hohlraum angrenzen. Somit bestehen in dieser Ausführungsform die erste Seitenwand, die zweite Seitenwand, die Verglasungsinnenraumwand, die Außenwand und sofern vorhanden auch die erste Verbindungswand und die zweite Verbindungswand des Grundkörpers aus dem ersten Kunststoff und dem zweiten Kunststoff, wobei die zum Hohlraum direkt benachbarten Bereiche des Grundkörpers aus dem ersten Kunststoff bestehen und die nicht direkt zum Hohlraum benachbarten Bereiche des Grundkörpers aus dem zweiten Kunststoff bestehen. Der Grundkörper besteht in dieser Ausführungsform somit aus einem aus dem ersten Kunststoff gebildeten Hohlprofil, das von dem zweiten Kunststoff komplett ummantelt ist oder anders ausgedrückt aus einem aus einem zweiten Kunststoff gebildeten Hohlprofil, in dem innenseitig unmittelbar angrenzend ein Hohlprofil aus einem ersten Kunststoff angeordnet ist.

In einer weiteren Ausführungsform bestehen die erste Seitenwand, die zweite Seitenwand, die Außenwand und sofern vorhanden auch die erste Verbindungswand und die zweite Verbindungswand des Grundkörpers aus dem ersten Kunststoff und dem zweiten Kunststoff, wobei zum Hohlraum direkt benachbarte Bereiche des Grundkörpers aus dem ersten Kunststoff bestehen und nicht direkt zum Hohlraum benachbarte Bereiche des Grundkörpers aus dem zweiten Kunststoff bestehen, und die Verglasungsinnenraumwand des Grundkörpers aus dem zweiten Kunststoff besteht. Der Grundkörper besteht dieser Ausführungsform somit aus einem aus dem zweiten Kunststoff gebildeten Hohlprofil, in dem innenseitig im Bereich der Außenwand, der ersten Seitenwand und der zweiten Seitenwand und sofern vorhanden auch im Bereich der ersten Verbindungswand und der zweiten Verbindungswand, ein im Wesentlichen U-förmiges Profil aus dem ersten Kunststoff angeordnet ist.

In einer weiteren Ausführungsform bestehen die erste Seitenwand, die zweite Seitenwand, die Verglasungsinnenraumwand und sofern vorhanden auch die erste Verbindungswand und die zweite Verbindungswand des Grundkörpers aus dem ersten Kunststoff und dem zweiten Kunststoff, wobei zum Hohlraum direkt benachbarte Bereiche des Grundkörpers aus dem ersten Kunststoff bestehen und nicht direkt zum Hohlraum benachbarte Bereiche des Grundkörpers aus dem zweiten Kunststoff bestehen, und die Außenwand des Grundkörpers besteht aus dem zweiten Kunststoff.

In einer weiteren Ausführungsform bestehen die erste Seitenwand, die zweite Seitenwand und sofern vorhanden auch die erste Verbindungswand und die zweite Verbindungswand des Grundkörpers aus dem ersten Kunststoff und dem zweiten Kunststoff, wobei zum Hohlraum direkt benachbarte Bereiche des Grundkörpers aus dem ersten Kunststoff bestehen und nicht direkt zum Hohlraum benachbarte Bereiche des Grundkörpers aus dem zweiten Kunststoff bestehen, und die Außenwand und die Verglasungsinnenraumwand des Grundkörpers bestehen aus dem zweiten Kunststoff.

In einer Ausführungsform weist der Grundkörper zusätzlich eine Vertiefung auf. Diese Vertiefung verläuft parallel zu den Seitenwänden des Hohlkörpers und ist zur Aufnahme einer Scheibe geeignet. Der Boden der Vertiefung wird bevorzugt durch die Außenwand gebildet. Dadurch wird eine größtmögliche Tiefe der Vertiefung erreicht und die Fläche der Seitenflanken der Vertiefung zur Stabilisierung der in der Vertiefung aufgenommenen Scheibe wird maximiert.

Der Grundkörper weist bevorzugt entlang der Verglasungsinnenraumwand eine Breite von 5 mm bis 80 mm, bevorzugt von 10 mm bis 20 mm auf. Die Breite ist im Sinne der Erfindung die sich zwischen den Seitenwänden erstreckende Dimension. Die Breite ist der Abstand zwischen den voneinander abgewandten Flächen der beiden Seitenwände. Durch die Wahl der Breite der Verglasungsinnenraumwand wird der Abstand zwischen den Scheiben der Isolierglaseinheit bestimmt. Das genaue Abmaß der Verglasungsinnenraumwand richtet sich nach den Dimensionen der Isolierglaseinheit und der gewünschten Scheibenzwischenraumgröße.

Der Grundkörper weist bevorzugt entlang der Seitenwände eine Höhe von 5 mm bis 15 mm, besonders bevorzugt von 5 mm bis 10 mm, auf. In diesem Bereich für die Höhe besitzt der Abstandhalter eine vorteilhafte Stabilität, ist aber andererseits in der Isolierglaseinheit vorteilhaft unauffällig. Außerdem weist der Hohlraum des Abstandhalters eine vorteilhafte Größe zur Aufnahme einer geeigneten Menge an Trockenmittel auf. Die Höhe des Abstandhalters ist der Abstand zwischen den voneinander abgewandten Flächen der Außenwand und der Verglasungsinnenraumwand.

Die Verglasungsinnenraumwand, die Außenwand, die Verbindungswände und die Seitenwände sind bevorzugt 0,5 mm bis 1,5 mm, besonders bevorzugt 0,8 mm bis 1,0 mm dick.

Der Grundkörper enthält bevorzugt ein Trockenmittel innerhalb des Hohlraums, bevorzugt Kieselgele, Molekularsiebe, CaCl₂, Na₂SO₄, Aktivkohle, Silikate, Bentonite, Zeolithe und/oder Gemische davon. Das Trockenmittel kann direkt vor dem Zusammenbau der Isolierglaseinheit eingefüllt werden. So wird eine besonders hohe Aufnahmekapazität des Trockenmittels in der fertigen Isolierglaseinheit sichergestellt. Die Verglasungsinnenraumwand weist bevorzugt Öffnungen/Perforierungen auf, welche eine Aufnahme der Luftfeuchtigkeit durch das im Grundkörper enthaltene Trockenmittel erlauben.

Die erste Seitenwand und die zweite Seitenwand stellen die Seiten des Abstandhalters dar, an denen beim Einbau des Abstandhalters die Montage der äußeren Scheiben einer Isolierglaseinheit erfolgt. Die erste Seitenwand und die zweite Seitenwand verlaufen parallel zueinander.

Die Außenwand des Grundkörpers ist die der Verglasungsinnenraumwand gegenüberliegende Wand, die vom Innenraum der Isolierglaseinheit (innerer Scheibenzwischenraum) weg in Richtung des äußeren Scheibenzwischenraums weist. Die Außenwand verläuft bevorzugt im Wesentlichen senkrecht zu den Seitenwänden.

Durch die Kombination zweier Kunststoffe mit unterschiedlichen Eigenschaften hinsichtlich Flexibilität und Wärmeleitfähigkeit können gezielt Stellen im Grundkörper des Abstandhalters thermisch oder mechanisch optimiert gestaltet werden.

Insbesondere bei kompletter Ummantelung von einem Hohlprofil aus einem ersten Kunststoff mit einem zweiten Kunststoff können bei geeigneter Auswahl des zweiten Kunststoffs noch weitere Eigenschaften wie beispielsweise die Haftung zur Folie, die UV-Beständigkeit oder das optische Erscheinungsbild verbessert werden. So kann beispielsweise auch wie oben beschrieben der erste Kunststoff ein Recyclingmaterial sein, das bei kompletter Ummantelung von dem zweiten Kunststoff verdeckt wird um ein optisch ansprechendes Erscheinungsbild zu gewährleisten.

In einer bevorzugten Ausführungsform des erfindungsgemäßen Abstandhalters sind der erste Kunststoff und/oder der zweite Kunststoff geschäumte Kunststoffe. Auf diese Weise lassen sich die thermischen Eigenschaften des Abstandhalters noch weiter verbessern.

In einer Ausführungsform weist der Abstandhalter eine Barrierefolie auf. Die Barrierefolie ist bevorzugt auf der Außenwand, der ersten Verbindungswand und der zweiten Verbindungswand und zumindest auf einem Teil der Seitenwände angeordnet. Die Barrierefolie kann beispielsweise mit einem Kleber auf dem Grundkörper befestigt werden. Die Barrierefolie umfasst beispielsweise eine metallhaltige Barriereschicht aus 7 µm dickem Aluminium, eine polymere Schicht aus 12 µm dickem Polyethylenterephthalat (PET) und eine metallhaltige Dünnschicht aus 10 nm dickem Aluminium. Polyethylenterephthalat ist besonders geeignet, um die 7 µm dicke Aluminiumschicht vor mechanischer Beschädigung zu schützen, da PET-Folien sich durch eine besonders hohe Reißfestigkeit auszeichnen. Die Folienschichten sind beispielsweise so angeordnet, dass die Aluminiumschichten, das heißt die metallhaltige Barriereschicht und die metallhaltige Dünnschicht, außen liegen. Die Folie ist bevorzugt auf einem Grundkörper so angeordnet, dass die metallhaltige Barriereschicht zur Außenwand zeigt. Dann zeigt die metallhaltige Dünnschicht nach außen und wirkt zugleich als Haftschicht gegenüber dem Material des sekundären Dichtmittels. So erfüllt die metallhaltige Dünnschicht nicht nur eine Barrierewirkung sondern auch die Aufgabe eines Haftvermittlers. Die Barrierefolie kann zur weiteren Verbesserung der thermischen Eigenschaften eine geschäumte Polymerschicht enthalten.

Die Erfindung umfasst auch ein Verfahren zur Herstellung eines erfindungsgemäßen Abstandhalters, mindestens umfassend den Schritt der Co-Extrusion des ersten Kunststoffs und des zweiten Kunststoffs zur Bildung des Grundkörpers.

Die Erfindung umfasst des Weiteren eine Isolierglaseinheit mit mindestens einer ersten Scheibe, einer zweiten Scheibe, einem umlaufenden zwischen erster und zweiter Scheibe angeordneten erfindungsgemäßen Abstandhalter, einem inneren Scheibenzwischenraum und einem äußeren Scheibenzwischenraum. Der erfindungsgemäße Abstandhalter ist zu einem umlaufenden Abstandhalterrahmen angeordnet. Die erste Scheibe ist dabei an der ersten Seitenwand des Abstandshalters über ein primäres Dichtmittel angebracht, und die zweite Scheibe ist an der zweiten Seitenwand über ein primäres Dichtmittel angebracht. Das bedeutet, zwischen der ersten Seitenwand und der ersten Scheibe sowie zwischen der zweiten Seitenwand und der zweiten Scheibe ist ein primäres Dichtmittel angeordnet. Dabei steht das primäre Dichtmittel im Kontakt mit den Seitenwänden oder mit einer Barrierefolie, die optional auf den Seitenwänden, den optionalen Verbindungswänden und der Außenwand des Grundkörpers angebracht sein kann. Die erste Scheibe und die zweite Scheibe sind parallel und bevorzugt deckungsgleich angeordnet. Die Kanten der beiden Scheiben sind daher im Randbereich bündig angeordnet, das heißt sie befinden sich auf gleicher Höhe. Der innere Scheibenzwischenraum wird von der ersten und zweiten Scheibe und der Verglasungsinnenraumwand begrenzt. Der äußere Scheibenzwischenraum ist definiert als der Raum, der durch die erste Scheibe, die zweite Scheibe und die optionale Barrierefolie auf der Außenwand oder die Außenwand des Grundkörpers begrenzt ist. Der äußere Scheibenzwischenraum ist mindestens teilweise mit einem sekundären Dichtmittel verfüllt. Das sekundäre Dichtmittel trägt zur mechanischen Stabilität der Isolierglaseinheit bei und nimmt einen Teil der Klimalasten auf, die auf den Randverbund wirken.

In einer bevorzugten Ausführungsform der erfindungsgemäßen Isolierglaseinheit erstreckt sich beim Vorhandensein einer Barrierefolie das primäre Dichtmittel bis auf die an die Verglasungsinnenraumwand angrenzenden Bereiche der ersten und zweiten Seitenwand, die frei von der Barrierefolie sind. Somit bedeckt das primäre Dichtmittel den Übergang zwischen Grundkörper und Barrierefolie, sodass eine besonders gute Abdichtung der Isolierglaseinheit erzielt wird. Auf diese Weise wird die Diffusion von Feuchtigkeit in den Hohlraum des Abstandhalters an der Stelle, wo die Barrierefolie an den Kunststoff grenzt, verringert (weniger Grenzflächendiffusion).

In einer weiteren bevorzugten Ausführungsform der erfindungsgemäßen Isolierglaseinheit ist das sekundäre Dichtmittel entlang der ersten Scheibe und der zweiten Scheibe so aufgebracht, dass ein mittlerer Bereich der Außenwand frei von sekundärem Dichtmittel ist. Der mittlere Bereich bezeichnet den in Bezug auf die beiden äußeren Scheiben mittig angeordneten Bereich, im Gegensatz zu den beiden äußeren Bereichen der Außenwand, die benachbart zur ersten Scheibe und zweiten Scheibe sind. Auf diese Weise wird eine gute Stabilisierung der Isolierglaseinheit erzielt, wobei gleichzeitig Materialkosten für das sekundäre Dichtmittel gespart werden. Gleichzeitig lässt sich diese Anordnung leicht herstellen, indem zwei Stränge aus sekundärem Dichtmittel jeweils auf die Außenwand im äußeren Bereich angrenzend an die äußeren Scheiben aufgebracht werden.

In einer weiteren bevorzugten Ausführungsform ist das sekundäre Dichtmittel so angebracht, dass der gesamte äußere Scheibenzwischenraum vollständig mit sekundärem Dichtmittel gefüllt ist. Dies führt zu einer maximalen Stabilisierung der Isolierglaseinheit.

Bevorzugt enthält das sekundäre Dichtmittel Polymere oder silanmodifizierte Polymere, besonders bevorzugt organische Polysulfide, Silikone, raumtemperaturvernetzenden (RTV) Silikonkautschuk, peroxidischvernetzten Silikonkautschuk und/oder additions-vernetzten Silikonkautschuk, Polyurethane und/oder Butylkautschuk. Diese Dichtmittel haben eine besonders gute stabilisierende Wirkung.

Das primäre Dichtmittel enthält bevorzugt ein Polyisobutylen. Das Polyisobutylen kann ein vernetzendes oder nicht vernetzendes Polyisobutylen sein.

Die erste Scheibe und die zweite Scheibe der Isolierglaseinheit enthalten bevorzugt Glas, Keramik und/oder Polymere, besonders bevorzugt Quarzglas, Borosilikatglas, Kalk-Natron-Glas, Polymethylmethacrylat oder Polycarbonat.

Die erste Scheibe und die zweite Scheibe verfügen über eine Dicke von 2 mm bis 50 mm, bevorzugt 3 mm bis 16 mm, wobei beide Scheiben auch unterschiedliche Dicken haben können.

In einer bevorzugten Ausführungsform der erfindungsgemäßen Isolierglaseinheit besteht der Abstandhalterrahmen aus einem oder mehreren erfindungsgemäßen Abstandhaltern. Es kann sich zum Beispiel um einen erfindungsgemäßen Abstandhalter handeln, der zu einem vollständigen Rahmen gebogen ist. Es kann sich auch um mehrere erfindungsgemäße Abstandhalter handeln, die über einen oder mehrere Steckverbinder miteinander verknüpft sind. Die Steckverbinder können als Längsverbinder oder Eckverbinder ausgeführt sein. Derartige Eckverbinder können beispielsweise als Kunststoffformteil mit Dichtung ausgeführt sein, in dem zwei mit einem Gärungsschnitt versehene Abstandhalter zusammenstoßen.

Grundsätzlich sind verschiedenste Geometrien der Isolierglaseinheit möglich, beispielsweise rechteckige, trapezförmige und abgerundete Formen. Zur Herstellung runder Geometrien kann der erfindungsgemäße Abstandhalter beispielsweise im erwärmten Zustand gebogen werden.

In einer weiteren Ausführungsform umfasst die Isolierglaseinheit mehr als zwei Scheiben. Dabei kann der Abstandhalter zum Beispiel Vertiefungen enthalten, in denen mindestens eine weitere Scheibe angeordnet ist. Es könnten auch mehrere Scheiben als Verbundglasscheibe ausgebildet sein.

Die Erfindung umfasst ferner ein Verfahren zur Herstellung einer erfindungsgemäßen Isolierglaseinheit mindestens umfassend die Schritte:
- Bereitstellen eines erfindungsgemäßen Abstandhalters,
- Zusammenfügen des Abstandhalters zu einem Abstandhalterrahmen,
- Bereitstellen einer ersten Scheibe und einer zweiten Scheibe,
- Fixieren des Abstandhalters über ein primäres Dichtmittel zwischen der ersten Scheibe und der zweiten Scheibe,
- Verpressen der Scheibenanordnung aus den beiden Scheiben und dem Abstandhalter und
- mindestens teilweise Füllen des äußeren Scheibenzwischenraums mit einem sekundären Dichtmittel.

Die Herstellung der Isolierglaseinheit erfolgt maschinell auf dem Fachmann bekannten Doppelverglasungsanlagen. Zunächst wird ein Abstandhalterrahmen umfassend den erfindungsgemäßen Abstandhalter bereitgestellt. Beispielsweise wird der Abstandhalterrahmen durch Verschweißen, Verkleben und/oder mithilfe eines Steckverbinders hergestellt. Eine erste Scheibe und eine zweite Scheibe werden bereitgestellt und der Abstandhalterrahmen wird über ein primäres Dichtmittel zwischen der ersten und der zweiten Scheibe fixiert. Der Abstandhalterrahmen wird mit der ersten Seitenwand des Abstandhalters auf die erste Scheibe aufgesetzt und über das primäre Dichtmittel fixiert. Anschließend wird die zweite Scheibe deckungsgleich zur ersten Scheibe auf die zweite Seitenwand des Abstandhalters aufgesetzt und ebenfalls über das primäre Dichtmittel fixiert und die Scheibenanordnung wird verpresst. Der äußere Scheibenzwischenraum wird mit einem sekundären Dichtmittel zumindest teilweise gefüllt. Das erfindungsgemäße Verfahren ermöglicht so die einfache und kostengünstige Herstellung einer Isolierglaseinheit. Es werden keine speziellen neuen Maschinen benötigt, da dank des Aufbaus des erfindungsgemäßen Abstandhalters herkömmliche Maschinen eingesetzt werden können, wie sie für aus dem Stand der Technik bekannte Abstandhalter bereits zur Verfügung stehen.

Die Bereitstellung der ersten Scheibe und der zweiten Scheibe kann dabei auch vor der Bereitstellung des erfindungsgemäßen Abstandhalterrahmens erfolgen.

Wie oben beschrieben erfolgt bei der Bereitstellung des Abstandhalterahmens die Fertigung des Grundkörpers des Abstandhalters durch Co-Extrusion eines ersten Kunststoffs mit einem zweiten Kunststoff.

Die Erfindung umfasst weiterhin die Verwendung der erfindungsgemäßen Isolierglaseinheit als Gebäudeinnenverglasung, Gebäudeaußenverglasung und / oder Fassadenverglasung.

Die verschiedenen Ausgestaltungen der Erfindung können einzeln oder in beliebigen Kombinationen realisiert sein. Insbesondere sind die vorstehend genannten und nachstehend erläuterten Merkmale nicht nur in den angegebenen Kombinationen, sondern auch in anderen Kombinationen oder in Alleinstellung einsetzbar, ohne den Rahmen der vorliegenden Erfindung zu verlassen.

Im Folgenden wird die Erfindung anhand von Zeichnungen und Ausführungsbeispielen näher erläutert. Die Zeichnungen sind schematische Darstellungen und nicht maßstabsgetreu. Die Zeichnungen schränken die Erfindung in keiner Weise ein.

Es zeigen:
- Fig. 1: einen Querschnitt einer Ausführungsform eines erfindungsgemäßen Abstandhalters,
- Fig. 2: einen Querschnitt einer weiteren Ausführungsform eines erfindungsgemäßen Abstandhalters,
- Fig. 3: einen Querschnitt einer weiteren Ausführungsform eines erfindungsgemäßen Abstandhalters,
- Fig. 4: einen Querschnitt einer weiteren Ausführungsform eines erfindungsgemäßen Abstandhalters,
- Fig. 5: einen Querschnitt einer weiteren Ausführungsform eines erfindungsgemäßen Abstandhalters,
- Fig. 6: einen Querschnitt einer weiteren Ausführungsform eines erfindungsgemäßen Abstandhalters,
- Fig. 7: einen Querschnitt einer weiteren Ausführungsform eines erfindungsgemäßen Abstandhalters,
- Fig. 8: eine perspektivische Ansicht eines Querschnitts einer Ausführungsform eines erfindungsgemäßen Abstandhalters,
- Fig. 9.: einen Querschnitt einer Ausführungsform einer erfindungsgemäßen Isolierglaseinheit, und
- Fig. 10: ein Fließdiagramm eines erfindungsgemäßen Verfahrens.

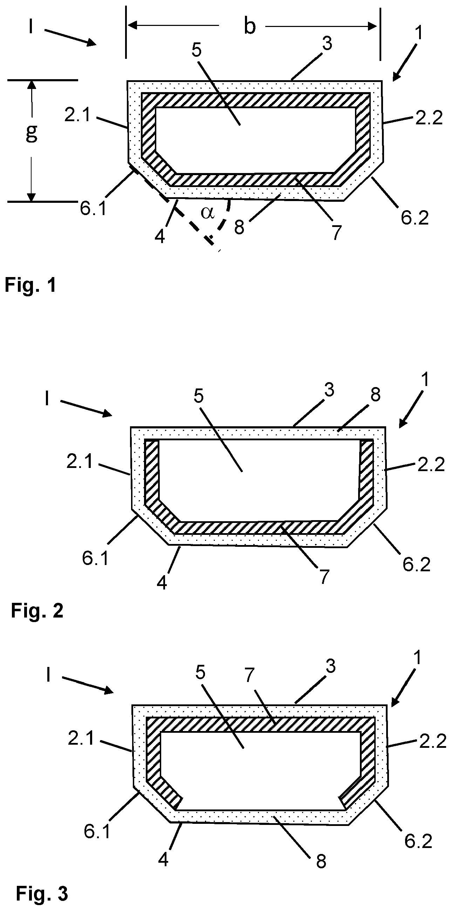

Fig. 1 zeigt einen Querschnitt einer Ausführungsform eines erfindungsgemäßen Abstandhalters I. In der in der Fig. 1 gezeigten Ausführungsform umfasst der Abstandhalter I einen Grundkörper 1, der aus einer ersten Seitenwand 2.1, einer parallel dazu angeordneten zweiten Seitenwand 2.2, einer Verglasungsinnenraumwand 3, einer Außenwand 4, einer ersten Verbindungswand 6.1, einer zweiten Verbindungswand 6.2 und einem Hohlraum 5 gebildet ist. Die erste Seitenwand 2.1 und die zweite Seitenwand 2.2 sind über die Verglasungsinnenraumwand 3 miteinander verbunden. Die Außenwand 4 ist im Wesentlichen parallel zur Verglasungsinnenraumwand 3 angeordnet und ist über die erste Verbindungswand 6.1 mit der ersten Seitenwand 2.1 und über die zweite Verbindungswand 6.2 mit der zweiten Seitenwand 2.2 verbunden. Die erste Verbindungswand 6.1 und die zweite Verbindungswand 6.2 sind optional, alternativ können die erste Seitenwand 2.1 und die zweite Seitenwand 2.2 auch direkt mit der Verglasungsinnenraumwand 3 verbunden sein. Der Hohlraum 5 ist von der ersten Seitenwand 2.1, der Verglasungsinnenraumwand 3, der zweiten Seitenwand 2.2, der ersten Verbindungswand 6.1, der zweiten Verbindungswand 6.2 und der Außenwand 4 umschlossen. Die Verbindungswände 6.1, 6.2 verlaufen bevorzugt in einem Winkel α (Alpha) von 30° bis 60° zur Außenwand 4. Die abgewinkelte Form der ersten Verbindungswand 6.1 und der zweiten Verbindungswand 6.2 verbessert die Stabilität des Grundkörpers und ermöglicht eine bessere Verklebung und Isolierung des erfindungsgemäßen Abstandshalters I.

Der Grundkörper 1 besteht aus einem ersten Kunststoff 7 und einem zweiten Kunststoff 8, wobei in der in der Fig. 1 gezeigten Ausführungsform die erste Seitenwand, 2.1, die zweite Seitenwand 2.2, die Verglasungsinnenraumwand 3, die Außenwand 4, die erste Verbindungswand 6.1 und die zweite Verbindungswand 6.2 aus dem ersten Kunststoff 7 und dem zweiten Kunststoff 8 bestehen, wobei die zum Hohlraum 5 direkt benachbarten Bereiche des Grundkörpers 1 aus dem ersten Kunststoff 7 bestehen und die nicht direkt zum Hohlraum 5 benachbarten Bereiche des Grundkörpers 1 aus dem zweiten Kunststoff 8 bestehen. Der Grundkörper 1 besteht in der in der Fig. 1 gezeigten Ausführungsform somit aus einem aus dem ersten Kunststoff 7 gebildeten Hohlprofil, das von dem zweiten Kunststoff 8 komplett ummantelt ist oder anders ausgedrückt aus einem aus einem zweiten Kunststoff 8 gebildeten Hohlprofil, in dem innenseitig unmittelbar angrenzend ein Hohlprofil aus einem ersten Kunststoff 7 angeordnet ist.

Die Wandstärke des Grundkörpers 1 beträgt zum Beispiel 1,5 mm, wobei die Wandstärke des aus dem ersten Kunststoff 7 gebildeten Hohlprofils 0,75 mm beträgt und die Dicke der Ummantelung durch den zweiten Kunststoff 8 ebenfalls 0,75 mm beträgt. Die Breite b des Grundkörpers 1 entlang der Verglasungsinnenraumfläche 3 beträgt zum Beispiel 12 mm. Die Gesamthöhe g des Grundkörpers 1 beträgt zum Beispiel 6,5 mm.

Der erste Kunststoff 7 ist beispielsweise Polypropylen (PP) mit einem Glasfaseranteil von 40 % und der zweite Kunststoff 8 beispielsweise Polypropylen (PP), das keine Glasfasern enthält.

Der Hohlraum 5 kann ein Trockenmittel 9 (in der Fig. 1 nicht gezeigt) aufnehmen. In der Verglasungsinnenraumwand 3 können Perforierungen 10 angebracht sein (in der Fig. 1 nicht gezeigt), die in der Isolierglaseinheit eine Verbindung zum inneren Scheibenzwischenraum 15 herstellen. Über die Perforierungen 10 in der Verglasungsinnenraumwand 3 kann das Trockenmittel 9 dann Feuchtigkeit aus dem inneren Scheibenzwischenraum 15 aufnehmen.

Der Grundkörper 1 der in der Fig. 1 gezeigten Ausführungsform eines erfindungsgemäßen Abstandhalters I ist durch Co-Extrusion des ersten Kunststoffs 7 und des zweiten Kunststoffs 8 hergestellt.

In der Fig. 2 ist ein Querschnitt einer weiteren Ausführungsform eines erfindungsgemäßen Abstandhalters I gezeigt. In der in der Fig. 2 gezeigten Ausführungsform umfasst der Abstandhalter I einen Grundkörper 1, der aus einer ersten Seitenwand 2.1, einer parallel dazu angeordneten zweiten Seitenwand 2.2, einer Verglasungsinnenraumwand 3, einer Außenwand 4, einer ersten Verbindungswand 6.1, einer zweiten Verbindungswand 6.2 und einem Hohlraum 5 gebildet ist. Die erste Seitenwand 2.1 und die zweite Seitenwand 2.2 sind über die Verglasungsinnenraumwand 3 miteinander verbunden. Die Außenwand 4 ist im Wesentlichen parallel zur Verglasungsinnenraumwand 3 angeordnet und ist über die erste Verbindungswand 6.1 mit der ersten Seitenwand 2.1 und über die zweite Verbindungswand 6.2 mit der zweiten Seitenwand 2.2 verbunden. Der Hohlraum 5 ist von der ersten Seitenwand 2.1, der Verglasungsinnenraumwand 3, der zweiten Seitenwand 2.2, der ersten Verbindungswand 6.1, der zweiten Verbindungswand 6.2 und der Außenwand 4 umschlossen. Die Verbindungswände 6.1, 6.2 verlaufen bevorzugt in einem Winkel α (Alpha) von 30° bis 60° zur Außenwand 4. Die abgewinkelte Form der ersten Verbindungswand 6.1 und der zweiten Verbindungswand 6.2 verbessert die Stabilität des Grundkörpers und ermöglicht eine bessere Verklebung und Isolierung des erfindungsgemäßen Abstandshalters I.

In der in der Fig. 2 gezeigten Ausführungsform besteht die Verglasungsinnenraumwand 3 aus dem zweiten Kunststoff 8. Die erste Seitenwand 2.1, die zweite Seitenwand 2.2, die Außenwand 4, die erste Verbindungswand 6.1 und die zweite Verbindungswand 6.2 bestehen aus dem ersten Kunststoff 7 und dem zweiten Kunststoff 8, wobei die zum Hohlraum 5 direkt benachbarten Bereiche des Grundkörpers 1 aus dem ersten Kunststoff 7 bestehen und die nicht direkt zum Hohlraum 5 benachbarten Bereiche des Grundkörpers 1 aus dem zweiten Kunststoff 8 bestehen. Der Grundkörper 1 besteht in der in der Fig. 2 gezeigten Ausführungsform somit aus einem aus dem zweiten Kunststoff 8 gebildeten Hohlprofil, in dem innenseitig im Bereich der Außenwand 4, der ersten Verbindungswand 6.1, der zweiten Verbindungswand 6.2, der ersten Seitenwand 2.1 und der zweiten Seitenwand 2.2 ein im Wesentlichen U-förmiges Profil aus dem ersten Kunststoff 7 angeordnet ist.

Die Wandstärke des Grundkörpers 1 beträgt zum Beispiel 1,5 mm in den Bereichen, in den die Wand sowohl durch den ersten Kunststoff 7 als auch durch den zweiten Kunststoff 8 gebildet wird, wobei der Anteil des ersten Kunststoff 7 an der Wandstärke 0,75 mm beträgt und der Anteil des zweiten Kunststoffs 8 an der Wandstärke ebenfalls 0,75 mm beträgt. In dem Bereich in dem die Wand nur durch den zweiten Kunststoff 8 gebildet wird, beträgt die Wandstärke zum Beispiel 0,75 mm. Die Breite b des Grundkörpers 1 entlang der Verglasungsinnenraumfläche 3 beträgt zum Beispiel 12 mm. Die Gesamthöhe g des Grundkörpers 1 beträgt zum Beispiel 6,5 mm.

In der in der Fig. 2 gezeigten Ausführungsform ist beispielsweise der erste Kunststoff 7 Acrylnitril-Butadien-Styrol (ABS) mit einem Glasfaseranteil von 30 % und der zweite Kunststoff ein thermoplastisches Polyurethan.

Der Hohlraum 5 kann ein Trockenmittel 9 (in der Fig. 2 nicht gezeigt) aufnehmen. In der Verglasungsinnenraumwand 3 können Perforierungen 10 angebracht sein (in der Fig. 2 nicht gezeigt), die in der Isolierglaseinheit II eine Verbindung zum inneren Scheibenzwischenraum 15 herstellen. Über die Perforierungen 10 in der Verglasungsinnenraumwand 3 kann das Trockenmittel 9 dann Feuchtigkeit aus dem inneren Scheibenzwischenraum 15 aufnehmen.

Der Grundkörper 1 der in der Fig. 2 gezeigten Ausführungsform eines erfindungsgemäßen Abstandhalters I ist durch Co-Extrusion des ersten Kunststoffs 7 und des zweiten Kunststoffs 8 hergestellt.

In der Fig. 3 ist ein Querschnitt einer weiteren Ausführungsform eines erfindungsgemäßen Abstandhalters I gezeigt. In der in der Fig. 3 gezeigten Ausführungsform umfasst der Abstandhalter I einen Grundkörper 1, der aus einer ersten Seitenwand 2.1, einer parallel dazu angeordneten zweiten Seitenwand 2.2, einer Verglasungsinnenraumwand 3, einer Außenwand 4, einer ersten Verbindungswand 6.1, einer zweiten Verbindungswand 6.2 und einem Hohlraum 5 gebildet ist. Die erste Seitenwand 2.1 und die zweite Seitenwand 2.2 sind über die Verglasungsinnenraumwand 3 miteinander verbunden. Die Außenwand 4 ist im Wesentlichen parallel zur Verglasungsinnenraumwand 3 angeordnet und ist über die erste Verbindungswand 6.1 mit der ersten Seitenwand 2.1 und über die zweite Verbindungswand 6.2 mit der zweiten Seitenwand 2.2 verbunden. Der Hohlraum 5 ist von der ersten Seitenwand 2.1, der Verglasungsinnenraumwand 3, der zweiten Seitenwand 2.2, der ersten Verbindungswand 6.1, der zweiten Verbindungswand 6.2 und der Außenwand 4 umschlossen. Die Verbindungswände 6.1, 6.2 verlaufen bevorzugt in einem Winkel α (Alpha) von 30° bis 60° zur Außenwand 4. Die abgewinkelte Form der ersten Verbindungswand 6.1 und der zweiten Verbindungswand 6.2 verbessert die Stabilität des Grundkörpers und ermöglicht eine bessere Verklebung und Isolierung des erfindungsgemäßen Abstandshalters I.

In der in der Fig. 3 gezeigten Ausführungsform besteht die Außenwand 4 aus dem zweiten Kunststoff 8. Die erste Seitenwand, 2.1, die zweite Seitenwand 2.2, die Verglasungsinnenraumwand 3, die erste Verbindungswand 6.1 und die zweite Verbindungswand 6.2 bestehen aus dem ersten Kunststoff 7 und dem zweiten Kunststoff 8, wobei die zum Hohlraum 5 direkt benachbarten Bereiche des Grundkörpers 1 aus dem ersten Kunststoff 7 bestehen und die nicht direkt zum Hohlraum 5 benachbarten Bereiche des Grundkörpers 1 aus dem zweiten Kunststoff 8 bestehen. Der Grundkörper 1 besteht in der in der Fig. 3 gezeigten Ausführungsform somit aus einem aus dem zweiten Kunststoff 8 gebildeten Hohlprofil, in dem innenseitig im Bereich der Verglasungsinnenraumwand 3, der ersten Verbindungswand 6.1, der zweiten Verbindungswand 6.2, der ersten Seitenwand 2.1 und der zweiten Seitenwand 2.2 ein Profil aus dem ersten Kunststoff 7 angeordnet ist.

Die Wandstärke des Grundkörpers 1 beträgt zum Beispiel 1,5 mm in den Bereichen, in den die Wand sowohl durch den ersten Kunststoff 7 als auch durch den zweiten Kunststoff 8 gebildet wird, wobei der Anteil des ersten Kunststoff 7 an der Wandstärke 0,75 mm beträgt und der Anteil des zweiten Kunststoffs 8 an der Wandstärke ebenfalls 0,75 mm beträgt. In dem Bereich in dem die Wand nur durch den zweiten Kunststoff 8 gebildet wird, beträgt die Wandstärke zum Beispiel 0,75 mm. Die Breite b des Grundkörpers 1 entlang der Verglasungsinnenraumfläche 3 beträgt zum Beispiel 12 mm. Die Gesamthöhe g des Grundkörpers 1 beträgt zum Beispiel 6,5 mm.

In der in der Fig. 3 gezeigten Ausführungsform ist beispielsweise der erste Kunststoff 7 Acrylnitril-Butadien-Styrol (ABS) mit einem Glasfaseranteil von 30 % und der zweite Kunststoff 8 ein thermoplastisches Polyurethan.

Der Hohlraum 5 kann ein Trockenmittel 9 (in der Fig. 3 nicht gezeigt) aufnehmen. In der Verglasungsinnenraumwand 3 können Perforierungen 10 angebracht sein (in der Fig. 3 nicht gezeigt), die in der Isolierglaseinheit II eine Verbindung zum inneren Scheibenzwischenraum 15 herstellen. Über die Perforierungen 10 in der Verglasungsinnenraumwand 3 kann das Trockenmittel 9 dann Feuchtigkeit aus dem inneren Scheibenzwischenraum 15 aufnehmen.

Der Grundkörper 1 der in der Fig. 3 gezeigten Ausführungsform eines erfindungsgemäßen Abstandhalters I ist durch Co-Extrusion des ersten Kunststoffs 7 und des zweiten Kunststoffs 8 hergestellt.

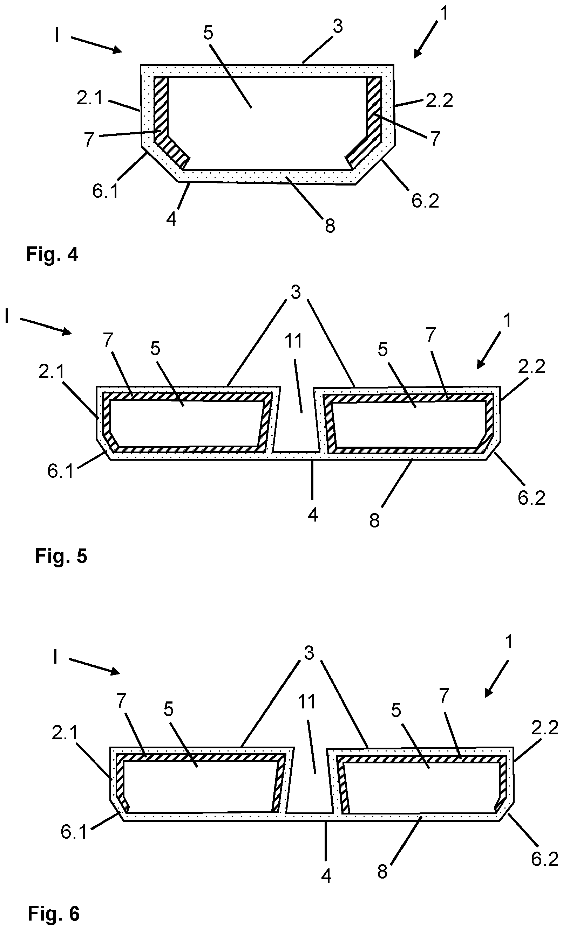

In der Fig. 4 ist ein Querschnitt einer weiteren Ausführungsform eines erfindungsgemäßen Abstandhalters I gezeigt. Die in der Fig. 4 dargestellte Ausführungsform unterscheidet sich von der in den in Fig. 2 und Fig. 3 gezeigten nur dahingehend, dass der Grundkörper 1 in der in der Fig. 4 gezeigten Ausführungsform aus einem aus dem zweiten Kunststoff 8 gebildeten Hohlprofil besteht, in dem innenseitig nur im Bereich der ersten Verbindungswand 6.1, der zweiten Verbindungswand 6.2, der ersten Seitenwand 2.1 und der zweiten Seitenwand 2.2 ein Profil aus dem ersten Kunststoff 7 angeordnet ist. Somit bestehen in dieser Ausführungsform die erste Verbindungswand 6.1, die zweite Verbindungswand 6.2, die erste Seitenwand 2.1 und die zweite Seitenwand 2.2 aus dem ersten Kunststoff 7 und dem zweiten Kunststoff 8 und die Verglasungsinnenraumwand 3 und die Außenwand 4 bestehen nur aus dem zweiten Kunststoff 8.

Der Grundkörper 1 der in der Fig. 4 gezeigten Ausführungsform eines erfindungsgemäßen Abstandhalters I ist durch Co-Extrusion des ersten Kunststoffs 7 und des zweiten Kunststoffs 8 hergestellt.

Fig. 5 zeigt einen Querschnitt einer weiteren Ausführungsform eines erfindungsgemäßen Abstandhalters I. Der in der Fig. 5 gezeigte Abstandhalter I entspricht im Wesentlichen dem in der Fig. 1 gezeigten Abstandhalter I, wobei der Grundkörper 1 in der Verglasungsinnenraumwand 3 eine im Wesentlichen parallel zu den Seitenwänden 2.1 und 2.2 verlaufende Vertiefung 11 zur Aufnahme einer Scheibe aufweist. Der Boden der Vertiefung 11 wird von der Außenwand 4 gebildet, wobei diese im Bereich der Vertiefung 11 nur aus dem zweiten Kunststoff 8 besteht. Es ist aber auch möglich, dass der Boden der Vertiefung 11 nicht an die Außenwand 4 angrenzt und sich eine oder beide Hohlkammern 5 unterhalb der Vertiefung 11 erstrecken oder das der Boden der Vertiefung 11 aus dem ersten Kunststoff 7 und dem zweiten Kunststoff 8 besteht.

Die Wandstärke des Grundkörpers 1 beträgt zum Beispiel 0,5 mm im Bereich der Vertiefung 11 und 1 mm in den übrigen Bereichen des Grundkörpers 1. Die Breite b des Grundkörpers 1 entlang der Verglasungsinnenraumfläche 3 beträgt zum Beispiel 25 mm. Die Gesamthöhe g des Grundkörpers 1 beträgt zum Beispiel 6,5 mm.

Der erste Kunststoff 7 ist beispielsweise Acrylnitril-Butadien-Styrol (ABS) mit einem Glasfaseranteil von 30 % und der zweite Kunststoff 8 Acrylnitril-Butadien-Styrol (ABS), das keine Glasfasern enthält.

Die Hohlräume 5 können ein Trockenmittel 9 (in der Fig. 5 nicht gezeigt) aufnehmen. In der Verglasungsinnenraumwand 3 können Perforierungen 10 angebracht sein (in der Fig. 5 nicht gezeigt), die in der Isolierglaseinheit eine Verbindung zu den inneren Scheibenzwischenräumen 15 herstellen. Über die Perforierungen 10 in der Verglasungsinnenraumwand 3 kann das Trockenmittel 9 dann Feuchtigkeit aus den inneren Scheibenzwischenräumen 15 aufnehmen.

Der Grundkörper 1 der in der Fig. 5 gezeigten Ausführungsform eines erfindungsgemäßen Abstandhalters I ist durch Co-Extrusion des ersten Kunststoffs 7 und des zweiten Kunststoffs 8 hergestellt.

Fig. 6 zeigt einen Querschnitt einer weiteren Ausführungsform eines erfindungsgemäßen Abstandhalters I. Der in der Fig. 6 gezeigte Abstandhalter I entspricht im Wesentlichen dem in der Fig. 3 gezeigten Abstandhalter I, wobei der Grundkörper 1 in der Verglasungsinnenraumwand 3 eine im Wesentlichen parallel zu den Seitenwänden 2.1 und 2.2 verlaufende Vertiefung 11 zur Aufnahme einer Scheibe aufweist. Der Boden der Vertiefung 11 wird von der Außenwand 4 gebildet. Die Außenwand besteht in der in der Fig. 6 gezeigten Ausführungsform nur aus dem zweiten Kunststoff 8. Es ist auch möglich, dass der Boden der Vertiefung 11 nicht an die Außenwand 4 angrenzt und sich eine oder beide Hohlkammern 5 unterhalb der Vertiefung 11 erstrecken oder das der Boden der Vertiefung 11 aus dem ersten Kunststoff 7 und dem zweiten Kunststoff 8 besteht.

Die Wandstärke des Grundkörpers 1 beträgt zum Beispiel 0,5 mm im Bereich der Vertiefung 11 und 1 mm in den übrigen Bereichen des Grundkörpers 1. Die Breite b des Grundkörpers 1 entlang der Verglasungsinnenraumfläche 3 beträgt zum Beispiel 25 mm. Die Gesamthöhe g des Grundkörpers 1 beträgt zum Beispiel 6,5 mm.

Der erste Kunststoff 7 ist beispielsweise Acrylnitril-Butadien-Styrol (ABS) mit einem Glasfaseranteil von 30 % und der zweite Kunststoff 8 Acrylnitril-Butadien-Styrol (ABS), das keine Glasfasern enthält.

Die Hohlräume 5 können ein Trockenmittel 9 (in der Fig. 6 nicht gezeigt) aufnehmen. In der Verglasungsinnenraumwand 3 können Perforierungen 10 angebracht sein (in der Fig. 6 nicht gezeigt), die in der Isolierglaseinheit eine Verbindung zu den inneren Scheibenzwischenräumen 15 herstellen. Über die Perforierungen 10 in der Verglasungsinnenraumwand 3 kann das Trockenmittel 9 dann Feuchtigkeit aus den inneren Scheibenzwischenräumen 15 aufnehmen.

Der Grundkörper 1 der in der Fig. 6 gezeigten Ausführungsform eines erfindungsgemäßen Abstandhalters I ist durch Co-Extrusion des ersten Kunststoffs 7 und des zweiten Kunststoffs 8 hergestellt.

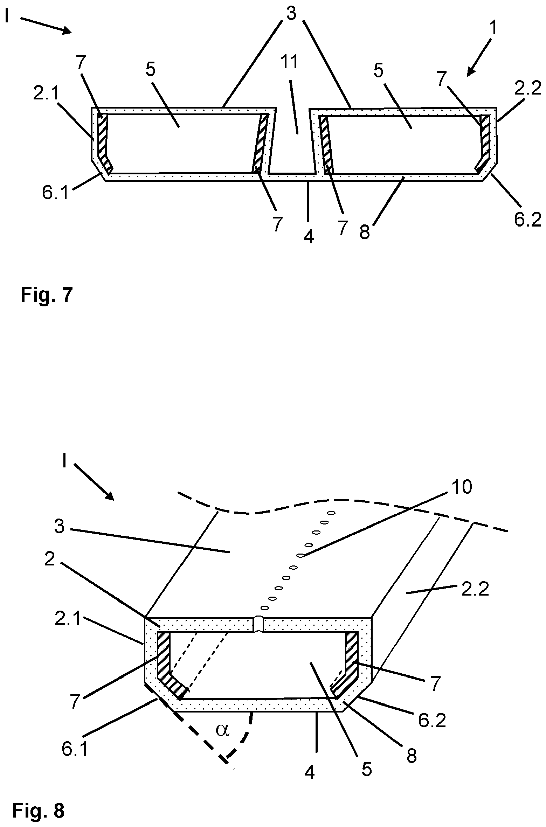

Fig. 7 zeigt einen Querschnitt einer weiteren Ausführungsform eines erfindungsgemäßen Abstandhalters I. Der in der Fig. 7 gezeigte Abstandhalter I entspricht im Wesentlichen dem in der Fig. 4 gezeigten Abstandhalter I, wobei der Grundkörper 1 in der Verglasungsinnenraumwand 3 eine im Wesentlichen parallel zu den Seitenwänden 2.1 und 2.2 verlaufende Vertiefung 11 zur Aufnahme einer Scheibe aufweist. Der Boden der Vertiefung 11 wird von der Außenwand 4 gebildet. Die Außenwand besteht in der in der Fig. 7 gezeigten Ausführungsform nur aus dem zweiten Kunststoff 8. Es ist auch möglich, dass der Boden der Vertiefung 11 nicht an die Außenwand 4 angrenzt und sich eine oder beide Hohlkammern 5 unterhalb der Vertiefung 11 erstrecken oder das der Boden der Vertiefung 11 aus dem ersten Kunststoff 7 und dem zweiten Kunststoff 8 besteht. Die Seitenwände der Vertiefung bestehen in der in der Fig. 7 gezeigten Ausführungsform aus dem ersten Kunststoff 7 und dem zweiten Kunststoff 8.

Die Wandstärke des Grundkörpers 1 beträgt zum Beispiel 0,5 mm im Bereich der Vertiefung 11 und 1 mm in den übrigen Bereichen des Grundkörpers 1. Die Breite b des Grundkörpers 1 entlang der Verglasungsinnenraumfläche 3 beträgt zum Beispiel 25 mm. Die Gesamthöhe g des Grundkörpers 1 beträgt zum Beispiel 6,5 mm.

Der erste Kunststoff 7 ist beispielsweise Acrylnitril-Butadien-Styrol (ABS) mit einem Glasfaseranteil von 30 % und der zweite Kunststoff 8 Acrylnitril-Butadien-Styrol (ABS), das keine Glasfasern enthält.

Die Hohlräume 5 können ein Trockenmittel 9 (in der Fig. 7 nicht gezeigt) aufnehmen. In der Verglasungsinnenraumwand 3 können Perforierungen 10 angebracht sein (in der Fig. 7 nicht gezeigt), die in der Isolierglaseinheit eine Verbindung zu den inneren Scheibenzwischenräumen 15 herstellen. Über die Perforierungen 10 in der Verglasungsinnenraumwand 3 kann das Trockenmittel 9 dann Feuchtigkeit aus den inneren Scheibenzwischenräumen 15 aufnehmen.

Der Grundkörper 1 der in der Fig. 7 gezeigten Ausführungsform eines erfindungsgemäßen Abstandhalters I ist durch Co-Extrusion des ersten Kunststoffs 7 und des zweiten Kunststoffs 8 hergestellt.

Fig. 8 zeigt eine perspektivische Ansicht eines Querschnitts einer Ausführungsform eines erfindungsgemäßen Abstandhalters I. Der in der Fig. 8 dargestellte Abstandhalter I entspricht dem in der Fig. 4 gezeigten Abstandhalter I. Aufgrund der perspektivischen Ansicht sind die Perforierungen 10 in der Verglasungsinnenraumwand 3 in der Fig. 8 zu sehen.

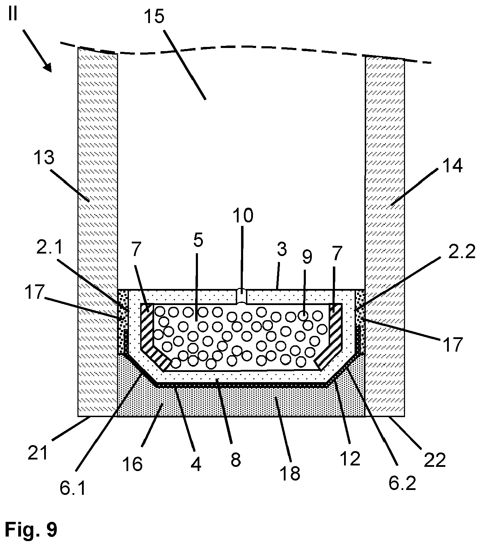

Fig. 9 zeigt einen Querschnitt der erfindungsgemäßen Isolierglaseinheit II mit einem zwischen einer ersten Scheibe 13 und einer zweiten Scheibe 14 angeordneten Abstandshalter I, der im Wesentlichen dem in der Fig. 4 beschriebenen entspricht, wobei der in der Fig. 9 in der Isolierglaseinheit II eingesetzte Abstandhalter I eine Barrierefolie 12 aufweist. Die Barrierefolie 12 ist auf der Außenwand 4, der ersten Verbindungswand 6.1 und der zweiten Verbindungswand 6.2 und auf einem Teil der Seitenwände 2.1 und 2.2 angeordnet. Die erste Scheibe 13, die zweite Scheibe 14 und die Barrierefolie 12 begrenzen den äußeren Scheibenzwischenraum 16 der Isolierglaseinheit II. Die Kante 21 der ersten Scheibe 13 und die Kante 22 der zweiten Scheibe 14 sind auf einer Höhe angeordnet. Im äußeren Scheibenzwischenraum 16 ist das sekundäre Dichtmittel 18, das zum Beispiel ein Silikon enthält, angeordnet. Silikone nehmen die auf den Randverbund wirkenden Kräfte besonders gut auf und tragen so zu einer hohen Stabilität der Isolierglaseinheit II bei. Die Barrierefolie 12 isoliert zusammen mit dem sekundären Dichtmittel 18 den inneren Scheibenzwischenraum 15 und vermindert den Wärmeübergang vom Grundkörper 1 in den inneren Scheibenzwischenraum 15. Die Barrierefolie 12 kann beispielsweise mit PUR-Hotmeltkleber auf dem Grundkörper 1 befestigt werden. Zwischen den Seitenwänden 2.1 und 2.2 und den Scheiben 13, 14 ist bevorzugt ein primäres Dichtmittel 17 angeordnet. Dies enthält zum Beispiel Butyl. Das primäre Dichtmittel 17 überlappt mit der Barrierefolie 12, um mögliche Grenzflächendiffusion zu verhindern. Die erste Scheibe 13 und die zweite Scheibe 14 weisen bevorzugt dieselben Abmessungen und Dicken auf. Die Scheiben weisen bevorzugt eine optische Transparenz von > 85 % auf. Die Scheiben 13, 14 enthalten bevorzugt Glas und/oder Polymere, bevorzugt Flachglas, Floatglas, Quarzglas, Borosilikatglas, Kalk-Natron-Glas, Polymethylmethacrylat und/oder Gemische davon. Die erste Scheibe 13 und die zweite Scheibe 14 sind beispielsweise 3 mm dick. In einer alternativen Ausführungsform können die erste Scheibe 13 und/oder die zweite Scheibe 14 als Verbundglasscheibe ausgebildet sein. Innerhalb des Hohlraums 5 des Grundkörpers 1 ist ein Trockenmittel 9, zum Beispiel Molsieb, angeordnet. Dieses Trockenmittel 9 kann in den Hohlraum 5 des Abstandshalters I vor dem Zusammenbau der Isolierglaseinheit II eingefüllt werden. Die Verglasungsinnenraumwand 3 umfasst eine Perforierung 10, die den Gasaustausch mit dem inneren Scheibenzwischenraum 15 ermöglicht.

Die Barrierefolie 12 umfasst beispielsweise eine metallhaltige Barriereschicht aus 7 µm dickem Aluminium, eine polymere Schicht aus 12 µm dickem Polyethylenterephthalat (PET) und eine metallhaltige Dünnschicht aus 10 nm dickem Aluminium. Polyethylenterephthalat ist besonders geeignet, um die 7 µm dicke Aluminiumschicht vor mechanischer Beschädigung zu schützen, da PET-Folien sich durch eine besonders hohe Reißfestigkeit auszeichnen. Die Folienschichten sind beispielsweise so angeordnet, dass die Aluminiumschichten, das heißt die metallhaltige Barriereschicht und die metallhaltige Dünnschicht, außen liegen. Die Folie ist auf einem Grundkörper 1 so angeordnet, dass die metallhaltige Barriereschicht zur Außenwand 4 zeigt. Dann zeigt die metallhaltige Dünnschicht nach außen und wirkt zugleich als Haftschicht gegenüber dem Material des sekundären Dichtmittels. So erfüllt die metallhaltige Dünnschicht nicht nur eine Barrierewirkung sondern auch die Aufgabe eines Haftvermittlers.

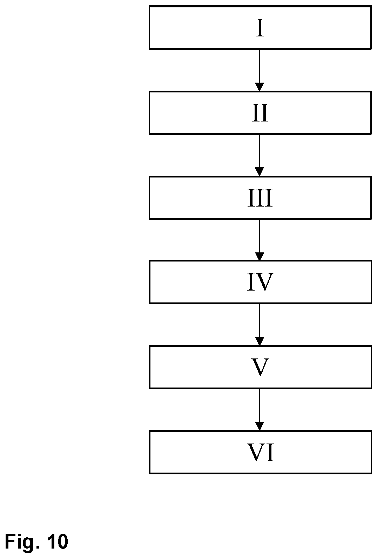

In der Fig. 10 ist das Fließdiagramm eines erfindungsgemäßen Verfahrens zur Herstellung einer erfindungsgemäßen Isolierglaseinheit II dargestellt. In einem ersten Schritt I wird ein erfindungsgemäßer Abstandhalter I bereitgestellt. In einem zweiten Schritt II wird der Abstandhalter I zu einem Abstandhalterrahmen zusammengefügt. In einem dritten Schritt III wird eine erste Scheibe 13 und eine zweite Scheibe 14 bereitgestellt. Alternativ kann der dritte Schritt III auch vor dem ersten Schritt I erfolgen. In einem vierten Schritt IV wird der Abstandhalter I über ein primäres Dichtmittel 17 zwischen der ersten Scheibe 13 und der zweiten Scheibe 14 fixiert. In einem fünften Schritt V wird die Scheibenanordnung aus den Scheiben 13, 14 und dem Abstandhalter I in einer Isolierglaspresse verpresst. In einem sechsten Schritt VI wird der äußere Scheibenzwischenraum 16 mit einem sekundären Dichtmittel 18 zumindest teilweise gefüllt.

### Bezugszeichenliste:

- I: Abstandhalter
- II: Isolierglaseinheit
- 1: Grundkörper
- 2.1: erste Seitenwand
- 2.2: zweite Seitenwand
- 3: Verglasungsinnenraumwand
- 4: Außenwand
- 5: Hohlraum
- 6.1: erste Verbindungswand
- 6.2: zweite Verbindungswand
- 7: erster Kunststoff
- 8: zweiter Kunststoff
- 9: Trockenmittel
- 10: Perforierung in der Verglasungsinnenraumwand
- 11: Vertiefung
- 12: Barrierefolie
- 13: erste Scheibe
- 14: zweite Scheibe
- 15: innerer Scheibenzwischenraum
- 16: äußerer Scheibenzwischenraum
- 17: primäres Dichtmittel
- 18: sekundäres Dichtmittel
- 21: Kante der ersten Scheibe
- 22: Kante der zweiten Scheibe
- b: Breite des polymeren Grundkörpers entlang der Verglasungsinnenraumfläche
- g: Gesamthöhe des Grundkörpers entlang der Scheibenkontaktflächen

## Patentansprüche

1. Abstandhalter (I) für Isolierglaseinheiten, mindestens umfassend
- einen aus einem ersten Kunststoff (7) und einem zweiten Kunststoff (8) co-extrudierten Grundkörper (1), umfassend
- eine erste Seitenwand (2.1) und eine parallel dazu angeordnete zweite Seitenwand (2.2),
- eine Verglasungsinnenraumwand (3), die die Seitenwände (2.1, 2.2) miteinander verbindet;
- eine Außenwand (4), die im Wesentlichen parallel zur Verglasungsinnenraumwand (3) angeordnet ist und die Seitenwände (2.1, 2.2) direkt oder über Verbindungswände (6.1, 6.2) miteinander verbindet;
- einen Hohlraum (5), der von den Seitenwänden (2.1, 2.2), der Verglasungsinnenraumwand (3) und der Außenwand (4) oder von den Seitenwänden (2.1, 2.2), der Verglasungsinnenraumwand (3), der Außenwand (4) und den Verbindungswänden (6.1, 6.2) umschlossen wird,
wobei der zweite Kunststoff (8) eine geringere Wärmeleitfähigkeit und eine höhere Flexibilität als der erste Kunststoff (7) aufweist und der Grundkörper (1) als ein aus dem zweiten Kunststoff (8) gebildetes Hohlprofil ausgebildet ist, in dem innenseitig unmittelbar angrenzend an das Hohlprofil zumindest bereichsweise der erste Kunststoff (7) angeordnet ist.

2. Abstandhalter (I) nach Anspruch 1, wobei der erste Kunststoff (7) zumindest im Bereich der Seitenwände (2.1, 2.2) angeordnet ist.

3. Abstandhalter (I) nach Anspruch 1 oder 2, wobei der erste Kunststoff (7) ein Recyclingmaterial enthält oder daraus besteht und der zweite Kunststoff (8) kein Recyclingmaterial enthält.

4. Abstandhalter (I) nach einem der Ansprüche 1 bis 3, wobei der erste Kunststoff (7) ein glasfaserverstärkter Kunststoff ist, insbesondere mit einem Glasfaseranteil von 10 % bis 40 %, und der zweite Kunststoff (8) einen geringeren Glasfaseranteil als der erste Kunststoff (7) aufweist oder ein glasfaserfreier Kunststoff ist.

5. Abstandhalter (I) nach einem der Ansprüche 1 bis 4, wobei der erste Kunststoff (7) und der zweite Kunststoff (8) auf unterschiedlichen Polymeren oder Copolymeren basieren.

6. Abstandhalter (I) nach einem der Ansprüche 1 bis 5, wobei zum Hohlraum (5) direkt benachbarte Bereiche des Grundkörpers (1) aus dem ersten Kunststoff (7) bestehen und nicht direkt zum Hohlraum (5) benachbarte Bereiche des Grundkörpers (1) aus dem zweiten Kunststoff (8) bestehen.

7. Abstandhalter (I) nach einem der Ansprüche 1 bis 5, wobei die erste Seitenwand (2.1), die zweite Seitenwand (2.2), die Außenwand (4), die erste Verbindungswand (6.1) und die zweite Verbindungswand (6.2) des Grundkörpers (1) aus dem ersten Kunststoff (7) und dem zweiten Kunststoff (8) bestehen, wobei zum Hohlraum (5) direkt benachbarte Bereiche des Grundkörpers (1) aus dem ersten Kunststoff (7) bestehen und nicht direkt zum Hohlraum (5) benachbarte Bereiche des Grundkörpers (1) aus dem zweiten Kunststoff (8) bestehen, und wobei die Verglasungsinnenraumwand (3) des Grundkörpers (1) aus dem zweiten Kunststoff (8) besteht.

8. Abstandhalter (I) nach einem der Ansprüche 1 bis 5, wobei die erste Seitenwand (2.1), die zweite Seitenwand (2.2), die Verglasungsinnenraumwand (3), die erste Verbindungswand (6.1) und die zweite Verbindungswand (6.2) des Grundkörpers (1) aus dem ersten Kunststoff (7) und dem zweiten Kunststoff (8) bestehen, wobei zum Hohlraum (5) direkt benachbarte Bereiche des Grundkörpers (1) aus dem ersten Kunststoff (7) bestehen und nicht direkt zum Hohlraum (5) benachbarte Bereiche des Grundkörpers (1) aus dem zweiten Kunststoff (8) bestehen, und wobei die Außenwand (4) des Grundkörpers (1) aus dem zweiten Kunststoff (8) besteht.

9. Abstandhalter (I) nach einem der Ansprüche 1 bis 5, wobei die erste Seitenwand (2.1), die zweite Seitenwand (2.2), die erste Verbindungswand (6.1) und die zweite Verbindungswand (6.2) des Grundkörpers (1) aus dem ersten Kunststoff (7) und dem zweiten Kunststoff (8) bestehen, wobei zum Hohlraum (5) direkt benachbarte Bereiche des Grundkörpers (1) aus dem ersten Kunststoff (7) bestehen und nicht direkt zum Hohlraum (5) benachbarte Bereiche des Grundkörpers (1) aus dem zweiten Kunststoff (8) bestehen, und wobei die Verglasungsinnenraumwand (3) und die Außenwand (4) des Grundkörpers (1) aus dem zweiten Kunststoff (8) bestehen.

10. Abstandhalter (I) nach einem der Ansprüche 1 bis 9, wobei die Verglasungsinnenraumwand (3) eine im Wesentlichen parallel zu den Seitenwänden (2.1) und (2.2) verlaufende Vertiefung (11) zur Aufnahme einer Scheibe aufweist.

11. Abstandhalter (I) nach einem der Ansprüche 1 bis 10, wobei der erste Kunststoff 7 und/oder der zweite Kunststoff 8 geschäumte Kunststoffe sind.

12. Verfahren zur Herstellung eines Abstandhalters I nach einem der Ansprüche 1 bis 11 mindestens umfassend den Schritt der Co-Extrusion des ersten Kunststoffs (7) und des zweiten Kunststoffs (8) zur Bildung des Grundkörpers (1).

13. Isolierglaseinheit (II), mindestens umfassend eine erste Scheibe (13), eine zweite Scheibe (14), einen zwischen erster Scheibe (13) und zweiter Scheibe (14) umlaufend angeordneten Abstandhalter (I) nach einem der Ansprüche 1 bis 11, wobei
- die erste Scheibe (13) über ein primäres Dichtmittel (17) an der ersten Seitenwand (2.1) angebracht ist,
- die zweite Scheibe (14) über ein primäres Dichtmittel (17) an der zweiten Seitenwand (2.2) angebracht ist,
- der Abstandhalter (I) einen inneren Scheibenzwischenraum (15) von einem äußeren Scheibenzwischenraum (16) trennt und
- im äußeren Scheibenzwischenraum (16) ein sekundäres Dichtmittel (18) angeordnet ist.

14. Verfahren zur Herstellung einer Isolierglaseinheit (II) nach Anspruch 13, wobei zumindest
(a) ein Abstandhalter (I) nach einem der Ansprüche 1 bis 11, bereitgestellt wird;
(b) der Abstandhalter (I) zu einem Abstandhalterrahmen zusammengefügt wird,
(c) eine erste Scheibe (13) und eine zweite Scheibe (14) bereitgestellt werden;
(d) der Abstandhalter (I) über ein primäres Dichtmittel (17) zwischen der ersten Scheibe (13) und der zweiten Scheibe (14) fixiert wird;
(e) die Scheibenanordnung aus den Scheiben (13, 14) und dem Abstandhalter (I) verpresst wird; und
(f) der äußere Scheibenzwischenraum (16) mit einem sekundären Dichtmittel (18) zumindest teilweise gefüllt wird.

15. Verwendung der Isolierglaseinheit (II) nach Anspruch 13 als Gebäudeinnenverglasung, Gebäudeaußenverglasung und/oder Fassadenverglasung.

## Claims

1. Spacer (I) for insulated glass units, at least comprising
- a main body (1) co-extruded from a first plastic (7) and a second plastic (8), comprising
- a first side wall (2.1) and a second side wall (2.2) arranged parallel thereto,
- a glazing interior wall (3), which connects the side walls (2.1, 2.2) to one another;
- an outer wall (4), which is arranged substantially parallel to the glazing interior wall (3) and connects the side walls (2.1, 2.2) to one another directly or via connecting walls (6.1, 6.2);
- a cavity (5), which is enclosed by the side walls (2.1, 2.2), the glazing interior wall (3), and the outer wall (4) or by the side walls (2.1, 2.2), the glazing interior wall (3), the outer wall (4), and the connecting walls (6.1, 6.2),
wherein the second plastic (8) has lower thermal conductivity and higher flexibility than the first plastic (7), and the main body (1) is designed as a hollow profile formed from the second plastic (8), in which hollow profile the first plastic (7) is arranged, at least zonally, on the inside directly adjacent the hollow profile.

2. Spacer (I) according to claim 1, wherein the first plastic (7) is arranged at least in the region of the side walls (2.1, 2.2).

3. Spacer (I) according to claim 1 or 2, wherein the first plastic (7) contains or is made of a recycled material, and the second plastic (8) contains no recycled material.

4. Spacer (I) according to one of claims 1 through 3, wherein the first plastic (7) is a glass-fiber-reinforced plastic, in particular with a glass fiber content from 10% to 40%, and the second plastic (8) has a lower glass fiber content than the first plastic (7) or is a glass-fiber-free plastic.

5. Spacer (I) according to one of claims 1 through 4, wherein the first plastic (7) and the second plastic (8) are based on different polymers or copolymers.

6. Spacer (I) according to one of claims 1 through 5, wherein regions of the main body (1) directly adjacent the cavity (5) are made from the first plastic (7), and regions of the main body (1) not directly adjacent the cavity (5) are made from the second plastic (8).

7. Spacer (I) according to one of claims 1 through 5, wherein the first side wall (2.1), the second side wall (2.2), the outer wall (4), the first connecting wall (6.1), and the second connecting wall (6.2) of the main body (1) are made from the first plastic (7) and the second plastic (8), wherein regions of the main body (1) directly adjacent the cavity (5) are made from the first plastic (7), and regions of the main body (1) not directly adjacent the cavity (5) are made from the second plastic (8), and wherein the glazing interior wall (3) of the main body (1) is made from the second plastic (8).

8. Spacer (I) according to one of claims 1 through 5, wherein the first side wall (2.1), the second side wall (2.2), the glazing interior wall (3), the first connecting wall (6.1), and the second connecting wall (6.2) of the main body (1) are made from the first plastic (7) and the second plastic (8), wherein regions of the main body (1) directly adjacent the cavity (5) are made from the first plastic (7), and regions of the main body (1) not directly adjacent the cavity (5) are made from the second plastic (8), and wherein the outer wall (4) of the main body (1) is made from the second plastic (8).

9. Spacer (I) according to one of claims 1 through 5, wherein the first side wall (2.1), the second side wall (2.2), the first connecting wall (6.1), and the second connecting wall (6.2) of the main body (1) are made from the first plastic (7) and the second plastic (8), wherein regions of the main body (1) directly adjacent the cavity (5) are made from the first plastic (7), and regions of the main body (1) not directly adjacent the cavity (5) are made from the second plastic (8), and wherein the glazing interior wall (3) and the outer wall (4) of the main body (1) are made from the second plastic (8).

10. Spacer (I) according to one of claims 1 through 9, wherein the glazing interior wall (3) has a recess (11) running substantially parallel to the side walls (2.1) and (2.2) to accommodate a pane.

11. Spacer (I) according to one of claims 1 through 10, wherein the first plastic 7 and/or the second plastic 8 are foamed plastics.

12. Method for producing a spacer I according to one of claims 1 through 11 at least comprising the step of co-extrusion of the first plastic (7) and the second plastic (8) to form the main body (1).

13. Insulated glass unit (II), at least comprising a first pane (13), a second pane (14), a spacer (I) according to one of claims 1 through 11, perimetrally arranged between the first pane (13) and the second pane (14), wherein
- the first pane (13) is attached to the first side wall (2.1) via a primary sealant (17),
- the second pane (14) is attached to the second side wall (2.2) via a primary sealant (17),
- the spacer (I) separates an inner interpane space (15) from an outer interpane space (16), and
- a secondary sealant (18) is arranged in the outer interpane space (16).

14. Method for producing an insulated glass unit (II) according to claim 13, wherein at least
(a) a spacer (I) according to one of claims 1 through 11 is provided;
(b) the spacer (I) is joined to form a spacer frame,
(c) a first pane (13) and a second pane (14) are provided;
(d) the spacer (I) is fixed between the first pane (13) and the second pane (14) via a primary sealant (17),
(e) the pane assembly composed of the panes (13, 14) and the spacer (I) is pressed; and
(f) the outer interpane space (16) is at least partially filled with a secondary sealant (18).

15. Use of the insulated glass unit (II) according to claim 13 as building interior glazing, building exterior glazing, and/or façade glazing.

## Revendications

1. Intercalaire (I) pour vitrage isolant, comprenant au moins
- un corps principal (1) coextrudé à partir d'une première matière plastique (7) et d'une seconde matière plastique (8), comprenant
- une première paroi latérale (2.1) et une deuxième paroi latérale (2.2) disposées parallèlement,
- une paroi intérieure vitrée (3), qui relie les parois latérales (2.1, 2.2) l'une à l'autre;
- une paroi extérieure (4), disposée sensiblement parallèlement à la paroi intérieure vitrée (3) et reliant les parois latérales (2.1, 2.2) l'une à l'autre directement ou par l'intermédiaire de parois de liaison (6.1, 6.2) ;
- une cavité (5) délimitée par les parois latérales (2.1, 2.2), la paroi intérieure vitrée (3) et la paroi extérieure (4) ou par les parois latérales (2.1, 2.2), la paroi intérieure vitrée (3), la paroi extérieure (4) et les parois de liaison (6.1, 6.2),
dans lequel le second plastique (8) a une conductivité thermique plus faible et une flexibilité plus élevée que le premier plastique (7), et le corps principal (1) est conçu comme un profilé creux formé à partir du second plastique (8), dans lequel le premier plastique (7) est disposé, au moins par zones, sur la face intérieure directement adjacente au profilé creux.

2. Intercalaire (I) selon la revendication 1, dans laquelle la première matière plastique (7) est disposée au moins dans la zone des parois latérales (2.1, 2.2).

3. Intercalaire (I) selon la revendication 1 ou 2, dans laquelle le premier plastique (7) contient ou est constitué d'un matériau recyclé, et le second plastique (8) ne contient pas de matériau recyclé.

4. Intercalaire (I) selon l'une des revendications 1 à 3, dans laquelle la première matière plastique (7) est une matière plastique renforcée de fibres de verre, en particulier avec une teneur en fibres de verre de 10 % à 40 %, et la deuxième matière plastique (8) a une teneur en fibres de verre inférieure à celle de la première matière plastique (7) ou est une matière plastique sans fibres de verre.

5. Intercalaire (I) selon l'une des revendications 1 à 4, dans laquelle la première matière plastique (7) et la seconde matière plastique (8) sont basées sur des polymères ou des copolymères différents.

6. Intercalaire (I) selon l'une des revendications 1 à 5, dans laquelle les régions du corps principal (1) directement adjacentes à la cavité (5) sont constituées de la première matière plastique (7), et les régions du corps principal (1) non directement adjacentes à la cavité (5) sont constituées de la seconde matière plastique (8).

7. Intercalaire (I) selon l'une des revendications 1 à 5, dans laquelle la première paroi latérale (2.1), la deuxième paroi latérale (2.2), la paroi extérieure (4), la première paroi de liaison (6.1) et la deuxième paroi de liaison (6. 2) du corps principal (1) sont en première matière plastique (7) et en deuxième matière plastique (8), les parties du corps principal (1) directement adjacentes à la cavité (5) étant en première matière plastique (7) et les parties du corps principal (1) non directement adjacentes à la cavité (5) étant en deuxième matière plastique (8), et la paroi intérieure vitrée (3) du corps principal (1) étant en deuxième matière plastique (8).

8. Intercalaire (I) selon l'une des revendications 1 à 5, dans lequel la première paroi latérale (2.1), la deuxième paroi latérale (2.2), la paroi intérieure du vitrage (3), la première paroi de liaison (6.1) et la deuxième paroi de liaison (6. 2) du corps principal (1) sont en première matière plastique (7) et en deuxième matière plastique (8), les parties du corps principal (1) directement adjacentes à la cavité (5) étant en première matière plastique (7) et les parties du corps principal (1) non directement adjacentes à la cavité (5) étant en deuxième matière plastique (8), et la paroi extérieure (4) du corps principal (1) étant en deuxième matière plastique (8).

9. Intercalaire (I) selon l'une des revendications 1 à 5, dans laquelle la première paroi latérale (2.1), la deuxième paroi latérale (2.2), la première paroi de liaison (6.1) et la deuxième paroi de liaison (6. 2) du corps principal (1) sont en première matière plastique (7) et en deuxième matière plastique (8), les parties du corps principal (1) directement adjacentes à la cavité (5) étant en première matière plastique (7), et les parties du corps principal (1) non directement adjacentes à la cavité (5) étant en deuxième matière plastique (8), et la paroi intérieure vitrée (3) et la paroi extérieure (4) du corps principal (1) étant en deuxième matière plastique (8).

10. Intercalaire (I) selon l'une des revendications 1 à 9, dans lequel la paroi intérieure du vitrage (3) présente un renfoncement (11) sensiblement parallèle aux parois latérales (2.1) et (2.2) pour accueillir une vitre.

11. Intercalaire (I) selon l'une des revendications 1 à 10, dans lequel le premier plastique 7 et/ou le second plastique 8 sont des plastiques moussés.

12. Procédé de fabrication d'un intercalaire I selon l'une des revendications 1 à 11 comprenant au moins l'étape de coextrusion de la première matière plastique (7) et de la seconde matière plastique (8) pour former le corps principal (1).

13. Vitrage isolant (II), comprenant au moins une première vitre (13), une deuxième vitre (14), un intercalaire (I) selon l'une des revendications 1 à 11, disposé de façon périmétrique entre la première vitre (13) et la deuxième vitre (14), dans lequel
- la première vitre (13) est fixée à la première paroi latérale (2.1) par l'intermédiaire d'un mastic primaire (17),
- la seconde vitre (14) est fixée à la seconde paroi latérale (2.2) par l'intermédiaire d'un mastic primaire (17),
- l'espaceur (I) sépare un espace interpanneau intérieur (15) d'un espace interpanneau extérieur (16), et
- un joint secondaire (18) est disposé dans l'espace interpanneau extérieur (16).

14. Procédé de fabrication d'un vitrage isolant (II) selon la revendication 13, dans lequel au moins
(a) un intercalaire (I) selon l'une des revendications 1 à 11 est fourni ;
(b) l'intercalaire (I) est assemblé pour former un cadre d'intercalaire,
(c) une première vitre (13) et une seconde vitre (14) sont fournies ;
(d) l'intercalaire (I) est fixé entre la première vitre (13) et la seconde vitre (14) par l'intermédiaire d'un mastic primaire (17),
(e) l'assemblage des vitres composé des vitres (13, 14) et de l'intercalaire (I) est pressé ; et
(f) l'espace interpanneau extérieur (16) est au moins partiellement rempli d'un mastic secondaire (18).

15. Utilisation du vitrage isolant (II) selon la revendication 13 comme vitrage intérieur d'un bâtiment, vitrage extérieur d'un bâtiment et/ou vitrage de façade.
